# EUROPÄISCHE PATENTSCHRIFT

(11) **EP 0 749 405 B1**
(45) Veröffentlichungstag und Bekanntmachung des Hinweises auf die Patenterteilung: **07.01.1998**
(21) Anmeldenummer: 95912235.9
(22) Anmeldetag: 09.03.1995
(51) Int. Cl.: C04B 18/02

(54) **VERFAHREN ZUR HERSTELLUNG VON MINERALWOLLE-FORMKÖRPERN**
METHOD OF PRODUCING MINERAL WOOL SHAPED BODIES
PROCEDE DE PRODUCTION DE CORPS MOULES EN LAINE MINERALE

(30) Priorität: 10.03.1994 DE 4407988
(43) Veröffentlichungstag der Anmeldung: 27.12.1996
(73) Patentinhaber: Deutsche Rockwool Mineralwoll-GmbH, 45966 Gladbeck (DE)
(72) Erfinder: KLOSE, Gerd-Rüdiger, D-46886 Dorsten (DE)
(74) Vertreter: Wanischeck-Bergmann, Axel, Dipl.-Ing.
(86) Internationale Anmeldenummer: EP9500888
(87) Internationale Veröffentlichungsnummer: WO9524363

(56) Entgegenhaltungen:
- EP-A- 0 462 298
- WO-A-92/12623
- GB-A- 752 293
- GB-A- 1 525 226
- NL-A- 8 003 965
- DATABASE WPI Section Ch, Derwent Publications Ltd., London, GB; Class L02, AN 72-67210T & SU-A-330 118 ( URAL BUILDING MATERIALS R)
- PATENT ABSTRACTS OF JAPAN vol. 013 no. 487 (C-649) ,6.November 1989 & JP,A,01 192743 (NIPPON STEEL CHEM CO LTD) 2.August 1989, & DATABASE WPI Week 8837 Derwent Publications Ltd., London, GB; AN 89-266670

## Beschreibung

Die Erfindung bezieht sich auf ein Verfahren zur Herstellung von Mineralwolle-Formkörpern. Unter Mineralwolle wird bevorzugt Steinwolle aber auch Glaswolle verstanden.

Es ist bereits eine außerordentlich große Anzahl von Mineralwolle-Produkten und auch Formkörpern bekannt und auf dem Markt, deren Gestaltungsweise bzw. Aufbau dem jeweiligen Einsatzgebiet angepaßt ist. Die meisten bekannten Mineralwolle-Produkte dienen der Wärme- und Schalldämmung von Gebäuden, Industrieanlagen, Fernwärmeleitungen und dergleichen.

Der Erfindung liegt die Aufgabe zugrunde, ein Verfahren zu schaffen, durch welches neue Einsatz- und Verwendungsmöglichkeiten für Mineralwolle erschlossen werden.

Die gestellte Aufgabe wird erfindungsgemäß dadurch gelöst, daß Mineralfasern, die mit Bindemitteln in Mengen von etwa 1 bis 10 Masse-% in bezug auf die Gesamtmasse versetzt sind, auf Langen von einigen Millimetern zerkleinert werden, daß diese mit Bindemitteln versetzten Mineralfasern einem Pelletiervorgang zur Bildung von kugel- oder zylinderförmigen Pellets mit Abmessungen von etwa 3 bis 15 mm unterworfen werden, und daß die Pellets einer Weiterverarbeitung und Aushärtung des Bindemittels zugeführt werden.

Die so gewonnenen Pellets eignen sich vornehmlich als Schüttdämmung für das Aufbringen auf Gebäudedecken, in Hohlräumen von Gebäuden oder Industrieanlagen, da sie aufgrund ihrer Formgestaltung hervorragend rieselfähig sind, ohne daß sich bei der Verarbeitung ein nennenswerter Abrieb ergibt. Gerade in bezug auf die Verarbeitung der Pellets auf der Baustelle ergeben sich erhebliche Vorteile, insbesondere Arbeitserleichterungen verglichen mit einem bereits bekannten Verfahren, wonach lose Mineralwolleflocken mittels spezieller Gebläseeinrichtungen in Hohlräume eingeblasen werden können.

Ein weiteres bevorzugtes Anwendungsgebiet für die gebildeten Pellets ist das der staubarmen Aufgabe in Schmelzöfen. Bei der Herstellung von Mineralwolleprodukten fallen nicht unerhebliche Anteile an Abfall an. Dieser Abfall kann nicht ohne weiteres in einen Schmelzofen eingegeben werden, um das Material der Wiedergewinnung zuzuführen, weil schichtweise aufgegebene lose Mineralwolle den Durchgang der Abgase im Schmelzofen so stark behindern würde, daß der Schmelzofen nicht mehr ordnungsgemäß arbeiten könnte. Bekannt ist, Abfall-Mineralwolle zu Briketts zu pressen und dann in dieser Form aufzugeben. Das Vorbehandeln der Abfall-Mineralwolle und das Verpressen ist aber mit außerordentlich großem Material- und Arbeitsaufwand und vor allem auch mit einem großen maschinentechnischen Aufwand verbunden.

Eine vorteilhafte Ausgestaltung des erfindungsgemäßen Verfahrens besteht darin, daß beim Pelletiervorgang zeitlich nacheinander Mineralfasermassen mit unterschiedlichem Gehalt an Bindemittelmengen aufgegeben werden. Auf diese Weise ist es möglich, den Pellets in den sich bildenden Umfangsschichten unterschiedliche Festigkeitseigenschaften zu verleihen.

In diesem Zusammenhang wird in weiterer Ausgestaltung der Erfindung vorgeschlagen, daß beim Pelletiervorgang zuerst Mineralfasermassen nahezu ohne oder mit geringem Gehalt an Bindemittel und anschließend Mineralfasermassen mit höherem Gehalt an Bindemittel zugegeben werden, derart, daß Pellets gebildet werden, deren Kern im wesentlichen aus mechanisch verhakten Mineralfasern und deren Mantel aus Mineralfasern mit angereichertem Bindemittel bestehen. Auf diese Weise ergibt sich der Vorteil, daß die Mantelschicht eine große Druckfestigkeit erhält, daß aber gleichzeitig ein erheblicher Anteil an Bindemittel eingespart werden kann. Außerdem bieten gerade diese Pellets sehr günstige Wärmedämmeigenschaften.

Je nach Einsatzgebiet der Pellets werden erfindungsgemäß unterschiedliche Bindemittel zugesetzt. So ist es in vielen Fällen von Vorteil, daß als Bindemittel durch Wärmebehandlung aushärtende organische Bindemittel zugesetzt werden.

Das Zusetzen des Bindemittels kann in an sich bekannter Weise unmittelbar nach der Herstellung der Mineralfasern in an sich bekannter Weise erfolgen. Insbesondere dann, wenn die Pellets in den Umfangsschichten unterschiedliche Bindemittelmengen aufweisen sollen, können die dem Pelletiervorgang nacheinander zugeführten Mineralfasermassen auch separat aufbereitet und mit entsprechenden Bindemittelmengen zum Beispiel durch Untermischen versetzt werden.

Ein anderes Einsatzgebiet der Pellets wird dadurch erschlossen, daß als Bindemittel bei Raumtemperatur hydraulisch aushärtende Bindemittel oder feindisperse, durch Trocknung aussteifende Bindemittel, wie Tonmineralien, zugesetzt werden.

Um die Festigkeit der Pellets im gewünschten Fall weiter zu verbessern, ist es von Vorteil, daß weitere den Zusammenhalt der Mineralfasern oder deren Haftung untereinander erhöhende Zusätze, wie Stärkebinder, Methylcellulose, Ethylenglykol oder Alginate, zugesetzt werden. Diese vorgenannten Zusätze können allein oder in Kombination miteinander Verwendung finden.

Eine weitere Ausgestaltung besteht darin, daß die den Kern der Pellets bildenden Mineralfasern mit Hydrophobiermitteln, wie Mineralölen, imprägniert werden. Auf diese Weise ergibt sich eine besonders günstige Witterungsbeständigkeit der Pellets.

Ein bevorzugtes Herstellungsverfahren wird dadurch geschaffen, daß die kugelförmigen Pellets in einem Pelletierteller gebildet werden und der Pelletierteller periodisch jeweils nach der Pelletsbildung zur Aushärtung des Bindemittels beheizt wird. Es versteht sich, daß der an sich zur Herstellung materialmäßig anderer Produkte bekannte Pelletierteller in für das Pelletieren geeignete Bewegungen gebracht wird.

Eine Alternative des Herstellungsverfahresn besteht darin, daß die kugelförmigen Pellets in einem Pelletierteller gebildet und anschließend einem zweiten kontinuierlich beheizten Pelletierteller zur Aushärtung des Bindemittels aufgegeben werden.

Wenn man nicht kugelförmige, sondern etwa zylinderförmige Pellets zu erhalten wünscht, wird dazu vorteilhafterweise eine rotierende Trommel verwendet, die zum Auslauf hin geneigt ist. Die darin gebildeten zylinderförmigen Pellets erhalten dann einen Durchmesser von etwa 3 bis 9 mm, vorzugsweise 3 bis 5 mm.

Die Weiterverarbeitung der Pellets kann dadurch erleichtert werden, daß die Pellets am Ausgang der Trommel zur Erzielung einer Vorverfestigung einer thermischen Behandlung unterworfen werden.

Diese Vorverfestigung erfolgt zweckmäßigerweise zunächst nur in dem Oberflächenbereich, um eine klebende Wirkung des im übrigen noch nicht vollständig ausgehärteten Bindemittels zu vermeiden. Dies gilt sinngemäß auch für die kugelförmigen Pellets. Die Pellets können dann einfacher weitertransportiert und der endgültigen Weiterverarbeitung zugeführt werden.

Wie oben bereits ausgeführt wurde, werden die Mineralfasern auf verhältnismäßig kurze Längen zerkleinert, so daß man hier auch von Feinstfasern sprechen kann, die wie beschrieben mit den verschiedenen Bindemitteln versehen bzw. imprägniert sind. Gemäß einer weiteren Ausgestaltung der Erfindung werden mit diesen Mineralfasern Stapelfasern, vorzugsweise aus Glasseide, Zellulose, Viskose, Aramid, Acrylnitril oder Garnabschnitte dieser Stapelfasern, vermischt oder zerrieben. Hierzu kann man einen an sich bekannten Zwangsmischer verwenden. Die Längen der zugegebenen Stapelfasern wird vorteilhafterweise zu etwa 5 bis 25 mm gewählt. Der Anteil der Stapelfasern wird dabei zweckmäßig zu etwa 5 bis 25 Masse-% bezogen auf die Gesamtmasse gewählt. Nach dem Vermischen bzw. Zerreiben der Stapelfasern mit den Mineralfasern erfolgt dann anschließend der oben beschriebene Pelletiervorgang.

Die Rohdichte der Pellets kann in den verschiedenen Anwendungsbereichen unterschiedlich sein. Es hat sich jedoch als vorteilhaft erwiesen, daß der Pelletiervorgang solange durchgeführt wird, bis die Pellets eine Rohdichte von etwa 150 bis 230 kg/m³ aufweisen.

Ein besonders bevorzugtes Anwendungsgebiet der Pellets wird dadurch erschlossen, daß die Pellets schichtweise gestreut auf mindestens eine große Oberfläche eines mit Bindemittel versehenen Mineralfasermassestromes, insbesondere einer Mineralfasermatte, aufgebracht und unter Druck mit dieser verbunden werden.

Dabei ist es besonders vorteilhaft, daß das Aufbringen der Pellets in einem Zustand erfolgt, in welchem die Bindemittel in den Pellets und in den Mineralfasermassestrom nicht ausgehärtet sind und daß die so gebildeten Schichten gemeinsam einem Härteofen zugeführt und die Bindemittel ausgehärtet werden. Auf diese Weise ergibt sich ein Mineralwolle-Produkt, welches eine hochverdichtete Oberfläche auf der Ober- und/oder Unterseite aufweist. Insbesondere dann, wenn die kugelförmigen oder zylinderförmigen Pellets durch thermische Behandlung im Oberflächenbereich eine Vorverfestigung erhalten haben, stellt sich eine grobporige und grobstrukturierte Oberfläche der so zusammengesetzten Mineralfaserbahn ein. Dieses bahn-oder auch plattenförmige Endprodukt eignet sich besonders für die Anbringung an Außenwänden von Gebäuden zu deren Wärme- und Schalldämmung. Aufgrund der Struktur der Oberfläche können beispielsweise mineralische Putze und andere Beschichtungen aufgebracht werden, die in die Oberfläche tief eindringen. Es ergibt sich also eine bessere Verankerung zwischen den Putzen bzw. Beschichtungen einerseits und dem Mineralfaserprodukt andererseits. Bei bisher üblichen Dämmstoffoberflächen ist ein solches Eindringen und Verankern nicht möglich, weil diese für die Putze bzw. Beschichtungen als Feinstfilter wirken.

Für den Mineralfasermassestrom in Form von Bahnen oder auch Platten, auf die die Pellets aufgebracht werden, kann man verschiedene vorkonfektionierte Dämmstoffe aus Mineralfasern verwenden, wobei die Mineralfasern im wesentlichen parallel zu den großen Oberflächen oder schräg zu den großen Oberflächen oder auch senkrecht zu den großen Oberflächen verlaufen können. Da diese vorkonfektionierten Bahnen oder Platten Bindemittel enthalten, die ebenso wie die Bindemittel in den Pellets noch nicht oder jedenfalls noch nicht vollständig ausgehärtet sind, kann man die Pellets auf jeden Fall unter Druck auf die Oberflächen aufbringen und unter Druck in einem Härteofen gemeinsam das vollständige Aushärten aller Bindemittelbestandteile bewirken.

Auch bei der Verwendung von Pellets, bei denen die Mineralfasern wie beschrieben mit Stapelfasern vermischt oder zerrieben werden, ist das Ziel, eine rauh strukturierte Oberfläche des bahn- oder plattenförmigen Endproduktes nach dem Ausgang aus dem Härteofen zu erzielen, so daß Putze und Beschichtungen auf der Oberfläche besser haften. Es ergibt sich dabei aber der weitere Vorteil, daß die zugesetzten Stapelfasern in den Pellets eine Armierung darstellen. Dadurch wird die Durchstoßgefahr von Dämmstoffhaltern an den betreffenden Gebäuden wesentlich verringert, so daß die Anzahl der Dämmstoffhalter und Dübel pro Flächeneinheit verringert werden kann, selbst wenn die auf der Außenwand eines Gebäudes aufgebrachte Hatte oder Platte besonders hohen Beanspruchungen, wie Windsog, ausgesetzt ist. Außerdem dient die auf diese Weise armierte Oberfläche einer besseren Verteilung von Punktlasten über die Masse des darunterliegnden Mineralwolle-Dämmstoffs.

## Patentansprüche

1. Verfahren zur Herstellung von Mineralwolle-Formkörpern, bei welchem Mineralfasern mit Bindemittel versetzt und die Mineralfasern auf Längen von einigen Millimetern zerkleinert und einem Pelletiervorgang zur Bildung von kugel- oder zylinderförmigen Pellets unterworfen werden, wobei beim Pelletiervorgang zeitlich nacheinander Mineralfasern mit unterschiedlichem Gehalt an Bindemittelmengen, vorzugsweise im Bereich zwischen 1 bis 10 Masse-% Bindemittel in bezug auf die Gesamtmasse zugeführt werden, die Mineralfasern auf Abmessungen von etwa 3 bis 15 mm pelletiert und die Pellets anschließend einer Aushärtung des Bindemittels und einer Weiterverarbeitung zugeführt werden.

2. Verfahren nach Anspruch 1, dadurch gekennzeichnet, daß beim Pelletiervorgang zuerst Mineralfasermassen nahezu ohne oder mit geringem Gehalt an Bindemittel und anschließend Mineralfasermassen mit höherem Gehalt an Bindemittel zugegeben werden, derart, daß Pellets gebildet werden, deren Kern im wesentlichen aus mechanisch verhakten Mineralfasern und deren Mantel aus Mineralfasern mit angereichertem Bindemittel bestehen.

3. Verfahren nach Anspruch 1 oder 2, dadurch gekennzeichnet, daß als Bindemittel durch Wärmebehandlung aushärtende organische Bindemittel zugesetzt werden.

4. Verfahren nach Anspruch 1 oder 2, dadurch gekennzeichnet, daß als Bindemittel bei Raumtemperatur hydraulisch aushärtende Bindemittel oder feindisperse, durch Trocknung aussteifende Bindemittel, wie Tonmineralien, zugesetzt werden.

5. Verfahren nach einem der vorhergehenden Ansprüche, dadurch gekennzeichnet, daß weitere den Zusammenhalt der Mineralfasern oder deren Haftung untereinander erhöhende Zusätze, wie Stärkebinder, Methylcellulose, Ethylenglykol oder Alginate, zugesetzt werden.

6. Verfahren nach Anspruch 2, dadurch gekennzeichnet, daß die den Kern der Pellets bildenden Mineralfasern mit Hydrophobiermitteln, wie Mineralölen, imprägniert werden.

7. Verfahren nach einem der vorhergehenden Ansprüche, dadurch gekennzeichnet, daß die kugelförmigen Pellets in einem Pelletierteller gebildet werden und der Pelletierteller periodisch jeweils nach der Pelletsbildung zur Aushärtung des Bindemittels beheizt wird.

8. Verfahren nach einem der Ansprüche 1 bis 7, dadurch gekennzeichnet, daß die kugelförmigen Pellets in einem Pelletierteller gebildet und anschließend einem zweiten kontinuierlich beheizten Pelletierteller zur Aushärtung des Bindemittels aufgegeben werden.

9. Verfahren nach einem der Ansprüche 1 bis 6, dadurch gekennzeichnet, daß die zylinderförmigen Pellets in einer rotierenden Trommel, die zum Auslauf hin geneigt ist, bis zu Durchmessern von etwa 3 bis 9 mm, vorzugsweise 3 bis 5 mm gebildet werdern.

10. Verfahren nach Anspruch 9, dadurch gekennzeichnet, daß die Pellets am Ausgang der Trommel zur Erzielung einer Vorverfestigung einer thermischen Behandlung unterworfen werden.

11. Verfahren nach einem der vorhergehenden Ansprüche, dadurch gekennzeichnet, daß mit den Mineralfasern Stapelfasern, vorzugsweise aus Glasseide, Zellulose, Viskose, Aramid, Acrylnitril oder Garnabschnitte dieser Stapelfasern, vermischt oder zerrieben werden.

12. Verfahren nach Anspruch 11, dadurch gekennzeichnet, daß Längen der zugegebenen Stapelfasern zu etwa 5 bis 25 mm gewählt sind.

13. Verfahren nach Anspruch 11 oder 12, dadurch gekennzeichnet, daß der Anteil der Stapelfasern zu etwa 5 bis 25 Masse-% bezogen auf die Gesamtmasse gewählt ist.

14. Verfahren nach einem der vorhergehenden Ansprüche, dadurch gekennzeichnet, daß der Pelletiervorgang solange durchgeführt wird, bis die Pellets eine Rohdichte von etwa 150 bis 230 kg/m³ aufweisen.

15. Verfahren nach einem der vorhergehenden Ansprüche, dadurch gekennzeichnet, daß die Pellets schichtweise gestreut auf mindestens eine große Oberfläche eines mit Bindemittel versehenen Mineralfasermassestromes, insbesondere einer Mineralfasermatte, aufgebracht und unter Druck mit dieser verbunden werden.

16. Verfahren nach Anspruch 15, dadurch gekennzeichet, daß das Aufbringen der Pellets in einem Zustand erfolgt, in welchem die Bindemittel in den Pellets und in den Mineralfasermassestrom nicht ausgehärtet sind und daß die so gebildeten Schichten gemeinsam einem Härteofen zugeführt und die Bindemittel ausgehärtet werden.

## Claims

1. Method of producing mineral wool shaped bodies, in which method mineral fibers are mixed with a binding agent and the mineral fibers are comminuted to lengths of several millimeters and are subject to a pelletizing action for the formation of spherical or cylindrical pellets, wherein during said pelletizing action mineral fibers with a different content of binding agent quantities, preferably within the range of 1 to 10 %-mass of binding agent, are supplied in a temporal succession with respect to the total mass, the mineral fibers are pelletised to sizes of approx. 3 to 15 mm and the pellets are subsequently subject to hardening of the binding agent and to further processing.

2. Method according to claim 1, characterized in that during the pelletizing action mineral fibers with almost no or a low content of binding agent are added first and thereafter mineral fibers with a higher content of binding agent, so that pellets are formed of which the core substantially consists of mechanically interhooked mineral fibers and of which the shell consists of mineral fibers with an enriched binding agent.

3. Method according to claim 1 or 2, characterized in that as binding agents organic binding agents are added that are hardenable by thermal treatment.

4. Method according to claim 1 or 2, characterized in that binding agents that are hydraulically hardenable at room temperature or finely disperse binding agents that are toughening by drying, such as clay minerals, are added as binding agents.

5. Method according to any one of the preceding claims, characterized in that further additives that increase the cohesion of the mineral fibers or their mutual adhesion, such as starch binders, methyl cellulose, ethylene glycol or alginates, are added.

6. Method according to claim 2, characterized in that the mineral fibers forming the core of the pellets are impregnated with waterproofing agents such as mineral oils.

7. Method according to any one of the preceding claims, characterized in that spherical pellets are formed in a pelletizing pan and that the pelletizing pan is periodically heated for hardening the binding agent each time after pellets formation.

8. Method according to any one of the claims 1 to 7, characterized in that the spherical pellets are formed in a pelletizing pan and thereafter are supplied to a second, continuously heated pelletizing pan for hardening the binding agent.

9. Method according to any one of the claims 1 to 6, characterized in that the cylindrical pellets are formed up to diameters of approx. 3 to 9 mm, preferably 3 to 5 mm, in a rotating drum which is inclined towards the delivery end.

10. Method according to claim 9, characterized in that the pellets are subject to a thermal treatment at the outlet of the drum, for obtaining a prestabilization.

11. Method according to any one of the preceding claims, characterized in that mixed or crushed with the mineral fibers are staple fibers, preferably from glass silk, cellulose, viscose, aramide, acrylonitrile, or yarn sections of these staple fibers.

12. Method according to claim 11, characterized in that lenghts of approx. 5 to 25 mm of the fibers added are chosen.

13. Method according to claim 11 or 12, characterized in that the fraction of the staple fibers is chosen at 5 to 25 %-mass relative to the total mass.

14. Method according to any one of the preceding claims, characterized in that the pelletizing action is continued until the pellets have a bulk density of approx. 150 to 230 kg/m³.

15. Method according to any one of the preceding claims, characterized in that the pellets are applied in a scattered fashion in layers to at least one large surface of a mineral fiber mass stream provided with a binding agent, particularly a mineral fiber mat, and are connected thereto under pressure.

16. Method according to claim 15, characterized in that the application of the pellets is effected in a condition in which the binding agents within the pellets and within the mineral fiber mass stream are not hardened, and that the layers thus formed are supplied in common to a hardening furnace and the binding agents are hardened.

## Revendications

1. Procédé pour fabriquer des corps moulés en laine minérale dans lequel des fibres minérales sont mélangées à un liant et les fibres minérales sont réduites à des longueurs de quelques milimètres et soumises à un processus de transformation en boulettes pour former des boulettes de forme sphérique ou cylindrique, des fibres minérales avec un taux différent de quantités de liant, de préférence de l'ordre de 1 à 10 % en masse de liant par rapport à la masse totale, étant amenées, lors du processus de transformation en boulettes, de manière consécutive dans le temps, les fibres minérales étant transformées en boulettes de dimensions d'environ 3 à 15 mm et les boulettes étant ensuite amenées à un poste de durcissement du liant et à un poste de transformation.

2. Procédé selon la revendication 1, caractérisé en ce que, lors du processus de transformation en boulettes, tout d'abord des masses de fibres minérales pratiquement sans ou avec un faible taux de liant sont ajoutées et ensuite des masses de fibres minérales avec un taux plus élevé de liant de telle manière que des boulettes sont formées dont le noyau est constitué essentiellement de fibres minérales accrochées mécaniquement et dont l'enveloppe est constituée par des fibres minérales avec un liant enrichi.

3. Procédé selon la revendication 1 ou 2, caractérisé en ce que comme liants on ajoute des liants organiques durcissant par traitement thermique.

4. Procédé selon la revendication 1 ou 2, caractérisé en ce que comme liants on ajoute des liants durcissant hydrauliquement à la température ambiante ou des liants en dispersion fine, se raidissant par séchage, comme des minéraux de l'argile.

5. Procédé selon l'une des revendications précédentes, caractérisé en ce que l'on ajoute d'autres adjuvants, qui augmentent la cohésion des fibres minérales ou leur adhérence les unes aux autres, comme un liant à l'amidon, de la méthylcellulose, de l'éthylène glycol ou de l'alginate.

6. Procédé selon la revendication 2, caractérisé en ce que les fibres minérales qui forment le noyau de la boulette sont imprégnées de substances imperméabilisantes comme les huiles minérales.

7. Procédé selon l'une des revendications précédentes, caractérisé en ce que les boulettes de forme sphérique sont formées dans un plateau de formation de boulettes et que le plateau de formation de boulettes est chauffé périodiquement respectivement après la formation de boulettes pour durcir le liant.

8. Procédé selon l'une des revendications 1 à 7, caractérisé en ce que les boulettes de forme sphériques sont formées dans un plateau de formation de boulettes et qu'elles sont ensuite amenées à un second plateau de formation de boulettes chauffé continuellement pour durcir le liant.

9. Procédé selon l'une des revendications 1 à 6, caractérisé en ce que les boulettes de forme cylindrique sont formées dans un tambour rotatif qui est incliné en direction de la sortie et ont des diamètres d'environ 3 à 9 mm, de préférence de 3 à 5 mm.

10. Procédé selon la revendication 9, caractérisé en ce que les boulettes sont soumises à un traitement thermique à la sortie du tambour pour obtenir une préconsolidation.

11. Procédé selon l'une des revendications précédentes, caractérisé en ce que des fibres artificielles, de préférence en soie de verre, cellulose, viscose, aramide, acrylnitrile ou des troncons de fil de ces fibres artificielles, sont mélangées ou broyées avec les fibres minérales.

12. Procédé selon la revendication 11, caractérisé en ce que l'on choisit des longueurs des fibres artificielles ajoutées d'environ 5 à 25 mm.

13. Procédé selon la revendication 11 ou 12, caractérisé en ce que le pourcentage des fibres artificielles est choisi d'environ 5 à 25 % en masse par rapport à la masse totale.

14. Procédé selon l'une des revendications précédentes, caractérisé en ce que le processus de formation de boulettes est effectué jusqu'à ce que les boulettes présentent une masse volumique apparente d'environ 150 à 230 kg/m³.

15. Procédé selon l'une des revendications précédentes, caractérisé en ce que les boulettes dispersées par couches sont amenées sur au moins une grande surface d'un flux de masse de fibres minérales pourvu de liant, en particulier d'une natte de fibres minérales, et qu'elles sont liées à celle-ci par pression.

16. Procédé selon la revendication 15, caractérisé en ce que l'épandage des boulettes se fait dans un état dans lequel les liants dans les bulettes et dans le flux de masse de fibres minérales ne sont pas durcis et que les couches ainsi formées sont amenées ensemble à un four de trempe et les liants sont durcis.
